# EUROPEAN PATENT APPLICATION

(11) **EP 4 583 222 A2**
(43) Date of publication of application: **09.07.2025**
(21) Application number: 25150100.3
(22) Date of filing: 02.01.2025
(51) Int. Cl.: H01M 10/04, H01M 10/0562

(54) **HIGH-TEMPERATURE PRESSURIZING SYSTEM FOR ALL-SOLID-STATE SECONDARY BATTERY, AND METHOD THEREOF**

(30) Priority: 04.01.2024 KR 20240001331
(71) Applicant: Hana Technology Co., Ltd., Gyeonggi-do 17118 (KR)
(72) Inventor: OH, Tae Bong, 16223 Suwon-si (KR); LEE, Souk Woo, 18297 Hwaseong-si (KR); HAN, Seung A, 07395 Seoul (KR); KIM, Sang Rae, 17103 Yongin-si (KR); NOH, Duck Ki, 18114 Osan-si (KR)
(74) Representative: Stöckeler, Ferdinand

(57) **Abstract**

Proposed are a high-temperature pressurizing system 1 for an all-solid-state secondary battery, and a method thereof. More specifically, Proposed are a high-temperature pressurizing system 1 for an all-solid-state secondary battery, and a method thereof, in which a pressurizing part, where a high-temperature pressurizing process is performed between a solid electrolyte and an active material of an all-solid-state secondary battery to maximize a contact interface and minimize an interfacial resistance, is configured along a perpendicular direction, thereby eliminating the need for a process of discharging a fluid from an internal space of a vessel after completing the high-temperature pressurizing process, reducing a tact time. At the same time, a plurality of pressurizing parts is arranged at predetermined intervals, thereby increasing process efficiency.

## Description

### CROSS REFERENCE TO RELATED APPLICATION

The present application claims priority to Korean Patent Application No. 10-2024-0001331, filed January 04, 2024, the entire contents of which is incorporated herein for all purposes by this reference.

### BACKGROUND OF THE DISCLOSURE

### 1. Field of the Disclosure

The present disclosure relates to a high-temperature pressurizing system 1 for all-solid-state secondary batteries and a method thereof. More specifically, the present disclosure relates to a high-temperature pressurizing system 1 for all-solid-state secondary batteries and a method thereof, in which a pressurizing part, where a high-temperature pressurizing process is performed between a solid electrolyte and an active material of an all-solid-state secondary battery to maximize a contact interface and minimize an interfacial resistance, is configured along a perpendicular direction, thereby eliminating the need for a process of discharging a fluid from an internal space of a vessel after completing the high-temperature pressurizing process, thus reducing a tact time. At the same time, a plurality of pressurizing parts is arranged at predetermined intervals, thereby increasing process efficiency.

### 2. Description of the Related Art

Recently, as the development of electric vehicles, energy storage batteries, robots, and satellites has begun, research on secondary batteries, which are high-performance batteries capable of repeated charging and discharging, has been actively conducted. Currently commercialized secondary batteries include nickel cadmium batteries, nickel hydrogen batteries, nickel zinc batteries, and lithium secondary batteries. Among these, lithium secondary batteries are attracting attention for their advantages of free charging and discharging, very low self-discharge rate, and high energy density as lithium secondary batteries have almost no memory effect compared to nickel-based secondary batteries.

These lithium secondary batteries mainly use lithium-based oxide and carbon material as positive and negative electrode active materials, respectively. Lithium secondary batteries include an electrode assembly, in which positive and negative electrode plates each coated with positive and negative active materials are disposed with a separator in between the positive and negative electrode plates, and include a pouch, which is an exterior material that seals and stores the electrode assembly together with an electrolyte.

Among them, all-solid-state secondary batteries are secondary batteries in which the main materials are all solid. By using a solid electrolyte, the risk of secondary battery fire and explosion is significantly reduced. Accordingly, it is possible for all-solid-state secondary batteries to use lithium metal, which was not utilized due to fire and explosion risks despite its expanded application range and superior performance. As a result, it is possible to dramatically increase energy density. Due to these advantages, development of all-solid-state secondary batteries is currently actively being carried out.

In these all-solid-state secondary batteries, the solid electrolyte allows ions to move between the solid lattices. Therefore, the contact interface between the active material and the electrolyte is required to be maximized while the interfacial resistance is required to be minimized. For this, all-solid-state secondary batteries have been manufactured by stacking solid electrolyte layers and then applying pressure using hydraulic press equipment, but all-solid-state secondary batteries manufactured in that way are not suitable for mass production.

To solve this problem, the inventor(s) of the present disclosure proposes a new high-temperature pressurizing system for all-solid-state secondary batteries with an improved structure/method, details of which will be described later.

### [Related Art Documents]

### [Patent Documents]

Korean Patent Application Publication No. 10-2015-0069523, titled "All Solid Secondary Battery and Method of Preparing All Solid Secondary Battery"

### SUMMARY OF THE DISCLOSURE

The present disclosure is devised to solve the problems of the conventional art.

A purpose of the present disclosure is to provide a high-temperature pressurizing system for an all-solid-state secondary battery, and method thereof. Herein, a pressurizing part is configured along a perpendicular direction, thereby eliminating the need for a process of discharging a fluid from an internal space of a vessel before removing a secondary battery from the vessel after the pressurizing process. This makes it possible to shorten a total process time.

In addition, another purpose of the present disclosure is to provide a high-temperature pressurizing system for an all-solid-state secondary battery, and method thereof. Herein, a pressurizing part is configured along a perpendicular direction, thereby eliminating the need for re-supplying a fluid to the internal space of the vessel before the pressurizing process. This makes it possible to improve process efficiency.

In addition, a further purpose of the present disclosure is to provide a high-temperature pressurizing system for an all-solid-state secondary battery, and method thereof. Herein, a plurality of pressurizing parts is spaced apart within a pressurizing space, thereby a high-temperature pressurizing processes are performed substantially simultaneously or overlapping in time by using one or more pairs of pressurizing parts. This makes it possible to increase process efficiency.

In addition, a yet further purpose of the present disclosure is to provide a high-temperature pressurizing system for an all-solid-state secondary battery, and method thereof. Herein, a spacer is configured in the internal space of the vessel, thereby controlling a volume of the internal space of the vessel. This makes it possible to shorten pressurizing time determined by the fluid flow.

In addition, a still yet further purpose of the present disclosure is to provide a high-temperature pressurizing system for an all-solid-state secondary battery, and method thereof. Herein, a fixing pin is inserted into one side of the corresponding vessel and door part along a horizontal direction, thereby ensuring that the corresponding vessel and door part are firmly coupled.

In addition, a still yet further purpose of the present disclosure is to provide a high-temperature pressurizing system for an all-solid-state secondary battery, and method thereof. Herein, a plurality of cover parts is configured to be able to be raised and lowered independently of each other, thereby completing the pressurizing processes.

The present disclosure may be implemented by embodiments having the following configuration to achieve the purposes described above.

According to one embodiment of the present disclosure, a high-temperature pressurizing system for an all-solid-state secondary battery may include a pressurizing part configured along a perpendicular direction so that an all-solid-state secondary battery is loaded from the bottom upward, and pressurizing the secondary battery by a supplied fluid; a door part configured to cause one side of the door part to be raised and lowered, thereby covering an open side of the pressurizing part; a storage tank for storing the fluid; and a piping part communicating with the pressurizing part and the storage tank, thereby supplying the fluid from the storage tank to the pressurizing part.

According to another embodiment of the present disclosure, in the high-temperature pressurizing system for an all-solid-state secondary battery, the pressurizing part may include a plurality of pressurizing parts that is arranged and spaced apart from each other in a pressurizing space.

According to a further embodiment of the present disclosure, in the high-temperature pressurizing system for an all-solid-state secondary battery, pressurizing processes may overlap each other in time by using the plurality of pressurizing parts.

According to a yet further embodiment of the present disclosure, the high-temperature pressurizing system for an all-solid-state secondary battery may further include a door transfer part connected to the door part and configured to move the door part back and forth between the pressurizing part and a standby part; and the standby part in which the secondary battery which has completely gotten through the pressurizing process is discharged from the pressurizing part.

According to a still yet further embodiment of the present disclosure, in the high-temperature pressurizing system for an all-solid-state secondary battery, the individual pressurizing part may include a vessel having an internal space extending in a perpendicular direction to bring a secondary battery to be inserted; and an input hole which allows the fluid from the storage tank to be supplied to the internal space of the vessel.

According to a still yet further embodiment of the present disclosure, in the high-temperature pressurizing system for an all-solid-state secondary battery, the individual input hole may be formed on the bottom of the corresponding vessel.

According to a still yet further embodiment of the present disclosure, in the high-temperature pressurizing system for an all-solid-state secondary battery, the individual pressurizing part may further include a spacer formed on the inner surface of the internal space to control a volume of the individual internal space.

According to a still yet further embodiment of the present disclosure, in the high-temperature pressurizing system for an all-solid-state secondary battery, the door part may include a plurality of door parts, in which the individual door part may include a coupling plate, one side of which is coupled with a driving means, thereby being raised or lowered; and a cover part which is releasably coupled to the coupling plate, thereby sealing or opening the internal space of the vessel.

According to a still yet further embodiment of the present disclosure, in the high-temperature pressurizing system for an all-solid-state secondary battery, the individual door part may further include a coupling guide part which is coupled with its corresponding coupling plate and controls the corresponding coupling plate to remain level with the ground.

According to a still yet further embodiment of the present disclosure, in the high-temperature pressurizing system for an all-solid-state secondary battery, the individual door part may further include first contact parts which are coupled to a corresponding coupling plate and exist as a pair, each moving forward and backward toward each other. The individual cover part may include a second contact part which is formed on the top of the corresponding cover part and is in close contact with each of the first contact parts constituting a pair as each of the first contact parts constituting a pair moves forward.

According to a still yet further embodiment of the present disclosure, in the high-temperature pressurizing system for an all-solid-state secondary battery, the individual door part may further include a discharge hole through which air in the internal space of the vessel is discharged when the fluid is introduced into the internal space of the vessel.

According to a still yet further embodiment of the present disclosure, in the high-temperature pressurizing system for an all-solid-state secondary battery, the individual pressurizing part may further include a first insertion hole configured to penetrate through the vessel at a predetermined height. The individual door part may further include a second insertion hole configured to penetrate through the cover part at a predetermined height, and a plurality of fixing pins which moves forward and is inserted into the corresponding first and second insertion holes.

According to a still yet further embodiment of the present disclosure, the high-temperature pressurizing system for an all-solid-state secondary battery may include a plurality of pressurizing parts configured along a perpendicular direction so that an all-solid-state secondary battery is loaded from the bottom upward, and high-temperature pressurizing the secondary battery by a supplied fluid; a plurality of door parts which is lowered to cause one side thereof to cover an open side of the corresponding pressurizing parts; a storage tank for storing the fluid; and a piping part communicating with the corresponding pressurizing parts and storage tank, thereby supplying the fluid from the storage tank to the corresponding pressurizing parts.

According to a still yet further embodiment of the present disclosure, a high-temperature pressurizing method for an all-solid-state secondary battery may include loading a secondary battery into an internal space of an individual vessel, or covering an open side of its corresponding vessel among the vessels into which the secondary battery has been loaded, by lowering the individual door part; and discharging a completely processed secondary battery from the internal space of the corresponding vessel by raising the individual door part after the pressurizing process is completed.

According to a still yet further embodiment of the present disclosure, in the high-temperature pressurizing method for an all-solid-state secondary battery, the fluid is water.

According to a still yet further embodiment of the present disclosure, in the high-temperature pressurizing method for an all-solid-state secondary battery, the individual door part may further include a discharge hole which allows air in the internal space of the corresponding vessel to be discharged when the fluid is introduced into the internal space of the corresponding vessel. The method may further include introducing the fluid from the storage tank into the internal space of the individual vessel through the piping part; and allowing the air in the corresponding internal space to be discharged to the outside when the fluid is introduced into the internal space of the individual vessel.

According to a still yet further embodiment of the present disclosure, the high-temperature pressurizing method for an all-solid-state secondary battery may further include fixing a to-be-processed secondary battery by moving the individual door part downward to cause one side of the individual door part to be lowered; moving the individual door part toward the pressurizing part by the door transfer part; and loading the fixed secondary battery into the internal space of the corresponding vessel by lowering the individual door part.

The present disclosure has the following effects by virtue of the above-described configuration.

The present disclosure allows the pressurizing part to be configured along a perpendicular direction, thereby eliminating the need for discharging a fluid in an internal space of a vessel before removing a secondary battery from the vessel after a pressurizing process has been completed. This has the effect of making it possible to shorten a total process time.

In addition, the present disclosure allows the pressurizing part to be configured along the perpendicular direction, thereby eliminating the need for re-supplying the fluid to the internal space of the vessel before the pressurizing process. This has the effect of improving process efficiency.

In addition, the present disclosure allows multiple pressurizing parts to be configured spaced apart within a pressurizing space, thereby high-temperature pressurizing processes are performed substantially simultaneously or overlapping in time by using one or more pairs of pressurizing parts. This has the effect of increasing process efficiency.

In addition, the present disclosure has a spacer configured in the internal space of the vessel, thereby controlling a volume of the internal space of the vessel. This has the effect of shortening a pressurizing time determined by the fluid flow.

In addition, the present disclosure allows a fixing pin to be inserted into one side of the corresponding vessel and the door part along the horizontal direction, thereby this has the effect of ensuring that the vessel and door part are firmly coupled.

In addition, the present disclosure is configured so that a plurality of cover parts can be raised and lowered independently of each other, thereby this has the effect of allowing the secondary battery, for which the pressurizing process has been completed, to be independently taken out from the vessel.

Meanwhile, it is to be added that even when there are effects, not explicitly mentioned herein, the effects described in the following specification and their potential effects expected from the technical features of the present disclosure are treated as if described in the specification of the present disclosure.

### BRIEF DESCRIPTION OF THE DRAWINGS

FIG. 1 shows a conceptual diagram of a high-temperature pressurizing system for all-solid-state secondary battery according to an embodiment of the present disclosure;
FIG. 2 shows a schematic perspective view of a pressurizing part and a cover part;
FIG. 3 shows a vertical cross-sectional view of the pressurizing part into which a cassette according to FIG. 1 is inserted;
FIG. 4 shows a cross-sectional view for explaining the coupling relationship between the pressurizing part and the door part according to FIG. 1; and
FIGs. 5 to 8 show reference diagrams for explaining a high-temperature pressurizing method for an all-solid-state secondary battery according to another embodiment of the present disclosure.

### DESCRIPTION OF THE PREFERRED EMBODIMENTS

Hereinafter, embodiments of the present disclosure will be described in more detail with reference to the attached drawings. The embodiments of the present disclosure can be modified in various forms, and the scope of the present disclosure should not be construed as limited to the following embodiments, but should be interpreted based on the matters stated in the claims. In addition, this embodiment is provided only as a reference to more completely explain the present disclosure to those with average knowledge in the art.

As used herein, the singular forms include the plural forms unless the context clearly indicates otherwise. Additionally, when used herein, the terms "comprise" and/or "comprising" means specifying the presence of stated features, numbers, steps, operations, members, elements, and/or groups thereof. The meanings do not exclude the presence or addition of one or more other shapes, numbers, operations, members, elements, and/or groups.

Hereinafter, when a component (or layer) is described as being disposed on another component (or layer), it should be noted that the component may be directly disposed on the other component, or there may be other component(s) or layer(s) interposed between the components. Additionally, when one component is expressed as being placed directly on or above another component, the other component(s) are not located between the components. Additionally, terms such as "top", "upper part", "lower part", "upper side", "lower side", "one side", or "side" of a component refer to relative positional relationships.

Hereinafter, when it is explained that one component is "connected" to another component, this is understood to include not only direct connection of both components but also connection by a third component.

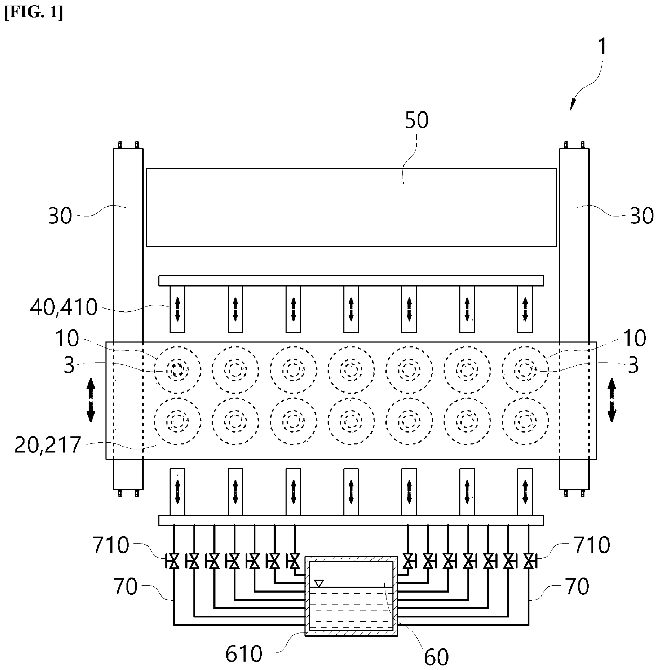

FIG. 1 shows a conceptual diagram of a high-temperature pressurizing system for all-solid-state secondary battery according to an embodiment of the present disclosure.

Hereinafter, a high-temperature pressurizing system 1 for an all-solid-state secondary battery according to an embodiment of the present disclosure will be described in detail with reference to the attached drawings.

Referring to FIG. 1, the present disclosure relates to a high-temperature pressurizing system 1 for an all-solid-state secondary battery. More specifically, the present disclosure relates to a high-temperature pressurizing system 1 for an all-solid-state secondary battery, in which a pressurizing part, where a high-temperature pressurizing process is performed between a solid electrolyte and an active material of an all-solid-state secondary battery to maximize a contact interface and minimize an interfacial resistance, is configured along a perpendicular direction, thereby eliminating the need for a process of discharging a fluid from an internal space of a vessel after completing the high-temperature pressurizing process, reducing a tact time. At the same time, a plurality of pressurizing parts is arranged at predetermined intervals, thereby increasing process efficiency.

The term "fluid" refers to a pressure transfer medium stored in the storage tank 60, which will be described later, and introduced into the internal space 110a of the pressurizing part 10, and the fluid is preferably a liquid. In addition, it is more preferable that the "fluid" is, for example, heat medium oil and/or water in the form of oil, but it should be noted that the scope of the fluid, used herein, is not limited by the examples.

In addition, the term "perpendicular direction" is preferably understood as a direction perpendicular to the ground. The pressurizing part 10 is configured along a perpendicular direction, thereby an opening part 111a, which will be described later, is perpendicular to the ground, so that a cassette 3 accommodating an all-solid-state secondary battery may be loaded from the bottom upward into the internal space 110a of the pressurizing part 10 and discharged upward. A detailed description of this will be provided later.

An all-solid-state secondary battery, for which a high-temperature pressurizing process is performed by the pressurizing part 10, may be directly loaded into the cassette 3. Alternatively, the all-solid-state secondary battery may be packed in a separate airtight part (not shown) and then loaded into the cassette 3. However, the latter is preferable. It is preferable that at least one side of the airtight part is formed of a material with high elongation characteristics to prevent the all-solid-state secondary battery from coming into direct contact with fluid, and at the same time, to transmit a pressure determined by the fluid flow to the secondary battery located inside.

Additionally, as mentioned above and described below, (one or more) secondary batteries may be accommodated in the cassette 3 and loaded into the pressurizing part 10. However, it should be noted that the secondary batteries do not necessarily have to be accommodated in the cassette 3. For example, the secondary batteries may be directly loaded into the pressurizing part 10, being packed in an airtight part. Alternatively, the secondary batteries may be loaded into the pressurizing part 10, being accommodated in a separate configuration other than the cassette 3 to accommodate the secondary batteries. Therefore, the scope of the present disclosure is not limited to specific examples.

The high-temperature pressurizing system 1 for all-solid-state secondary battery according to another embodiment of the present disclosure may include a pressurizing part 10, a door part 20, a door transfer part 30, a locking part 40, a standby part 50, and a storage tank 60, and a piping part 70. In FIG. 1, one end of the piping part 70 is connected to the storage tank 60, but the other end thereof is shown to be disconnected. However, it should be noted that the other end of the individual piping part 70 is connected to the corresponding pressurizing part 10. Additionally, it should be noted that the door transfer part 30 and the standby part 50 are not essential components of the present disclosure.

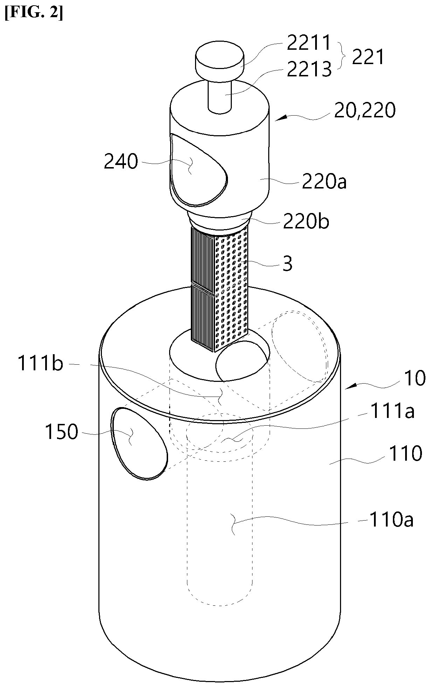

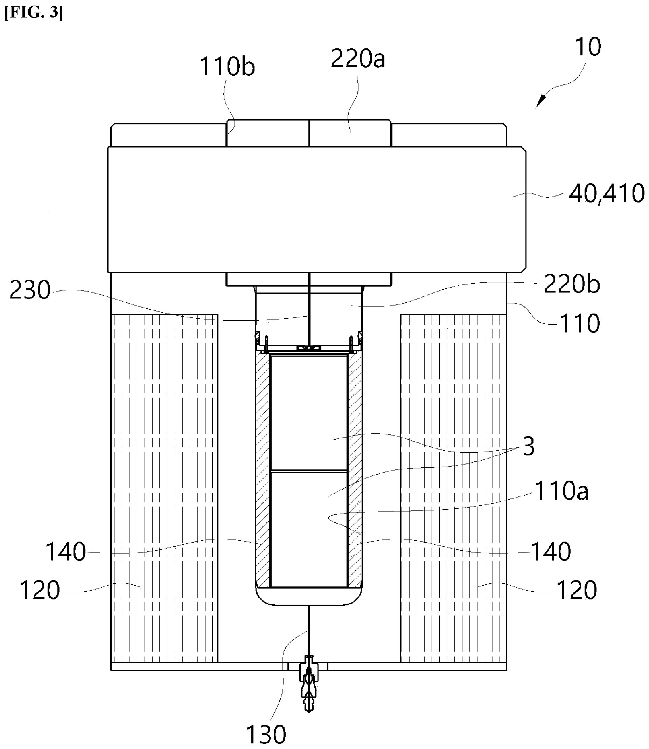

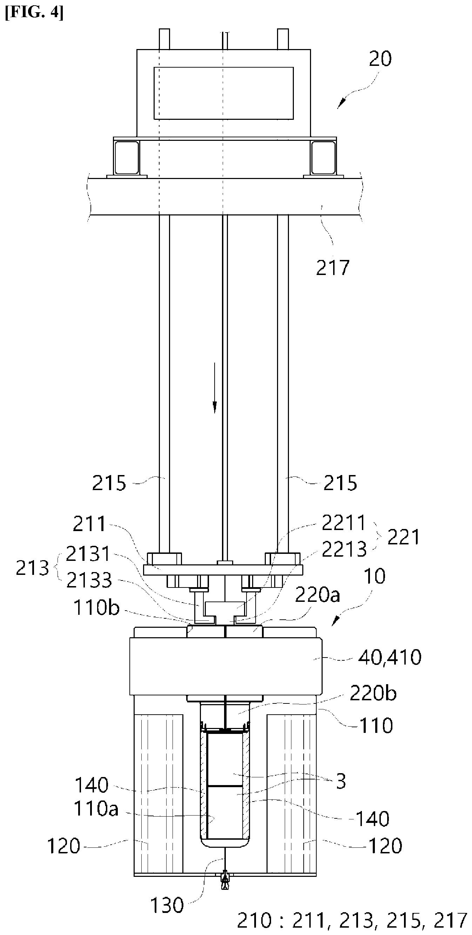

FIG. 2 shows a schematic perspective view of a pressurizing part and a cover part. FIG. 3 shows a vertical cross-sectional view of the pressurizing part into which a cassette according to FIG. 1 is inserted. FIG. 4 shows a cross-sectional view for explaining the coupling relationship between the pressurizing part and the door part according to FIG. 1.

Referring to FIGs. 1 to 4, the pressurizing part 10 allows the cassette 3 accommodating the all-solid-state secondary battery to be loaded into the internal space 110a, thereby providing a configuration in which the secondary battery is pressurized at high temperature by the supplied fluid. A plurality of such pressurizing parts 10 may be arranged to be spaced apart from each other in a pressurizing space. For example, the pressurizing parts 10 may be arranged along multiple rows and/or multiple columns in the pressurizing space. For example, as shown in FIG. 1, the pressurizing parts 10 may be arranged along two rows so that seven parts in each row are spaced apart from each other, but the scope of the present disclosure is not limited thereto.

Generally, a single high-temperature pressurizing process for an all-solid-state secondary battery is performed for a long time (e.g., approximately 40 to 60 minutes). However, as in a further embodiment of the present disclosure, a plurality of pressurizing parts 10 are arranged, thereby the high-temperature pressurizing processes for the secondary batteries accommodated in a plurality of cassettes C are performed substantially simultaneously, or the high-temperature pressurizing processes for at least some of the secondary batteries are performed overlapping in time. This may dramatically shorten a total process time. That is, in a yet further embodiment of the present disclosure, the pressurizing processes for the secondary batteries in the plurality of cassettes 3 corresponding to the individual pressurizing parts 10 may be performed substantially simultaneously. Alternatively, only the pressurizing processes for the secondary batteries in the plurality of cassettes 3 corresponding to some pressurizing parts 10 may be performed substantially simultaneously. Alternatively, the pressurizing processes for the secondary batteries in the plurality of cassettes 3 corresponding to the individual pressurizing parts 10 may be performed independently in time. Alternatively, the pressurizing processes that progress through at least some of the pressurizing parts 10 may be performed so that the pressurizing processes overlap in time. There is no separate limitation on the pressurizing process method. In some cases, the pressurizing processes for the individual pressurizing parts 10 may be performed in time series. It is understood that the term "high-temperature pressurizing process" or "pressurizing process" refers to a process of loading the cassette C accommodating the secondary battery into the individual pressurizing part 10 to discharging the cassette C from the pressurizing part 10. In addition, it is understood that the term "overlapping in time" refers to a state in which the pressurizing processes are being performed by at least some of the pressurizing parts 10 at a predetermined point in time. For example, when one cassette C is loaded into one pressurizing part 10 at a predetermined point in time, and the secondary battery is pressurized by the fluid in the other pressurizing part 10, the high-temperature pressurizing processes by both pressurizing parts 10 overlap in time.

In addition, it is preferable that the pressurizing part 10 is arranged along a direction perpendicular to the ground, thereby the cassette 3 is loaded from the bottom upward as the cassette 3 moves downward from above (see FIG. 2), and the cassette 3 is discharged upward from the internal space 110a.

For this, the pressurizing part 10 may include a vessel 110, tension wires 120, an input hole 130, a spacer 140, and a first insertion hole 150.

Referring to FIGs. 2 and 3, the vessel 110 configures an external shape of the pressurizing part 10 and has an internal space 110a into which the cassette 3 is loaded or inserted. It is preferable that the vessel 110 has a structure in which the lower portion thereof is closed except for the input hole 130, which will be described later. The internal space 110a of the vessel may be formed into a structure in which the vessel 110 is depressed downward from a predetermined height, and the cassette 3 is loaded or inserted from the bottom upward. That is, the upper side of the internal space 110a is open. Accordingly, after the high-temperature pressurizing process is completed, the cassette 3 may be easily taken out from the internal space 110a of the vessel 110 without the need for discharging the fluid from the internal space 110a.

In contrast, problems in the case where the internal space 110a is formed in the horizontal direction will be described.

When at least one side of the internal space 110a is open, and the door part 20, which will be described later, moves backwards in a horizontal direction, the fluid filling the internal space 110a has no choice but to be automatically discharged to the outside of the vessel 110 through the opening part 111a of the internal space 110a. To prevent a situation like this, a problem arises in that the fluid supplied into the internal space 110a of the vessel 110 is required to be discharged in advance from the internal space 110a before the door part 20 moves backward.

In addition, when the high-temperature pressurizing process is re-performed, the fluid in the internal space 110a is discharged. Thus, re-supplying the fluid to the internal space 110a is also required to be added. In other words, time is required to discharge all of the fluid and re-supply the fluid to the internal space 110a. This may be a major factor in reducing overall process efficiency.

Additionally, the internal space 110a may be a space in which the fluid is supplied through the input hole 130 during the high-temperature pressurizing process. For this, the internal space 110a may communicate with the storage tank 60 and/or the piping part 70 through the input hole 130. In addition, the internal space 110a may also communicate with a discharge hole 230 of the door part 20, which will be described later. In addition, the internal space 110a may be formed in a cylindrical structure, for example, but the scope of the present disclosure is not limited thereto.

Additionally, an insertion part 110b may be further formed on the internal space 110a of the vessel 110. The insertion part 110b communicates with the opening part 111a of the internal space 110a and is formed to have a left and right width or diameter that is larger than the opening part 111a. The insertion part 110b may, for example, be formed in a cylindrical structure. In this insertion part 110b, one side of the door part 20, which will be described later, may be inserted and come into contact with a step located at the boundary between the insertion part 110b and the internal space 110a. Additionally, a heat transfer part such as a heating block (not shown) may be formed on one side of the vessel 110 to maintain the temperature of the supplied fluid, but the scope of the present disclosure is not limited thereto.

Referring to FIG. 3, the tension wires 120 are made of wires wound around an outer surface of the vessel 110. The tension wires 120 may be wound to a thickness of a predetermined level or more to press the vessel 110. Therefore, when the fluid is supplied to the internal space 110a of the vessel 110, internal pressure is generated in the internal space 110a. At this time, the tension wires 120 may control the internal pressure generated laterally. In addition, the internal pressure generated in the perpendicular direction may be controlled by a locking part 40, which will be described later. A detailed description of this will be provided later. Additionally, it should be noted that, in a still yet further embodiment of the present disclosure, instead of utilizing the tension wires 120 wound around the outer surface of the vessel 110, the vessel 110 may be formed as a mono block type to withstand internal pressure within a predetermined range.

The input hole 130 is configured as a through hole that allows the fluid from the storage tank 60 to be supplied to the internal space 110a of the vessel 110 by opening a valve 710. This input hole 130 may be connected to the piping part 70, which will be described later. When the valve 710 of the piping part 70 is opened, the fluid is supplied to the internal space 110a through the input hole 130. When the valve 710 is closed/blocked, the supply of the fluid may be stopped. In addition, the input hole 130 may be formed at any position in the vessel 110. However, considering that the upper surface of the vessel 110 is covered by the door part 20 before and after the pressurizing process, and the tension wires 120 are wound around the side of the vessel, the input hole 130 is preferably formed on the bottom of the vessel 110.

The spacer 140 is formed on the inner surface or inner circumferential surface of the internal space 110a of the vessel 110, and is configured to allow the cassette 3 to be loaded or inserted into the vessel 110. Through this spacer 140, the volume of the internal space 110a of the vessel 110 may be reduced to a desired level, thereby shortening the pressurizing time determined by the fluid flow during the high-temperature pressurizing process. For example, the internal space 110a of the vessel 110 may be formed in a cylindrical shape, and the cassette 3 may be formed in a substantially rectangular parallelepiped shape. Therefore, when inserting the cassette 3 into the internal space 110a, dead space is likely to occur, and the spacer 140 may be used to remove the dead space.

Therefore, it is preferable that the spacer 140 has an outer surface shaped to correspond to the internal space 110a of the vessel 110 so that the cassette 3 may be inserted into the internal space 110a, and that the side, into which the cassette 3 is inserted, has a shape corresponding to the outer surface of the cassette 3. Additionally, it should be noted that the spacer 140 is not an essential component of the present disclosure.

Referring to FIG. 2, the first insertion hole 150 is formed to penetrate through the vessel 110 at a predetermined height to allow one side of the locking part 40, which will be described later, to be inserted. To be more specific, the first insertion hole 150 and the second insertion hole 240 of the door part 20 are matched to each other. Then, the fixing pin 410 moves forward to be inserted into the first and second insertion holes 150 and 240. Thereby, the vessel 110 and the door part 20 may be coupled with each other. Therefore, it is preferable that the first insertion hole 150 is formed to communicate with the insertion part 110b, for example, at a height where the insertion part 110b is formed. In addition, the first insertion hole 150 may be formed to penetrate in a substantially horizontal direction with the second insertion hole 240.

Referring to FIGs. 2 to 4, the door part 20 is configured to be raised and lowered, thereby covering the upper side of the internal space 110a of the vessel 110. For example, the bottom of the door part 20 may be inserted into the internal space 110a and the insertion part 110b, thereby sealing the internal space 110a of the vessel 110. At this time, one side of the door part 20 may be configured to be connected to a driving means such as a hydraulic cylinder, pneumatic cylinder (not shown), or a drive motor so that the door part 20 is raised and lowered. However, the scope of the present disclosure is not limited thereto. Additionally, a separate packing structure (not shown) may be formed at the joint portion of the door part 20 and the pressurizing part 10 to prevent fluid leakage. In addition, the door part 20 may have a configuration in which the cassette 3 is coupled to the bottom of the door part 20 to substantially transport the cassette 3.

This door part 20 may include a coupling part 210, a cover part 220, a discharge hole 230, and a second insertion hole 240.

One side of the coupling part 210 is coupled to the cover part 220, thereby the coupling part 210 moves back and forth between the pressurizing part 10 and the standby part 50 by the door transfer part 30. In a still yet further embodiment, the coupling part 210 may be configured so that the other side thereof is raised and lowered together with the cover part 220.

For this, the coupling part 210 may include a coupling plate 211, first contact parts 213, coupling guide parts 215, and a fixing plate 217.

Referring to FIG. 4, the coupling plate 211 has a plate-shaped structure in which one side of the coupling plate 211 is coupled to the driving means, thereby the coupling plate 211 is raised and lowered. For example, the upper surface of the coupling plate 211 may be configured to be raised and lowered by a shaft configuration connected to a drive motor.

The first contact parts 213 are a pair of components coupled to the coupling plate 211 and are configured to move forward to be adjacent to each other or to move backwards away from each other. Each of the first contact parts 213 constituting a pair is configured to come into contact with the second contact part 221 of the cover part 220, which will be described later, so that the cover part 220 is coupled to the coupling part 210. For this, the individual first contact parts 213 extend downward from the bottom of the coupling plate 211. The individual first contact parts 213 may preferably include a downward extension part 2131 extending downward from the bottom of the coupling plate 211, preferably extending perpendicularly; and a bent part 2133 bent in an opposite direction from the bottom of the downward extension portion 2131, and preferably extends horizontally. That is, the individual first contact parts 213 may be formed in an "L" shape. At this time, the downward extension part 2131 is coupled to the coupling plate 211 and may be designed to be capable of moving forward and backward using any known configuration. A plurality of the first contact parts 213 constituting a pair facing each other may be formed on one side of the coupling plate 211. It is preferable that each of the first contact parts 213 constituting a pair facing each other should be formed in a number that corresponds one to one with the cover part 220. However, the scope of the present disclosure is not limited thereto.

The coupling guide parts 215 have their upper end fixed to the fixing plate 217 and their lower end coupled to the coupling plate 211, thereby controlling the coupling plate 211 to remain level with the ground. A plurality of such coupling guide parts 215 may be formed to be spaced apart from each other, and there is no separate limitation on the number. The coupling guide parts 215 allow the coupling plate 211 and the cover part 220 to remain horizontal, thereby the cover part 220 may be easily inserted into the internal space 110a of the vessel 110. Additionally, the coupling guide parts 215 may have a cylindrical rod shape, for example, but there is no separate limitation on the shape.

The fixing plate 217 is formed on the upper side of the coupling plate 211, allows the coupling guide parts 215 to be coupled. The fixing plate 217 has a configuration through which a shaft connected to the driving means penetrates. This fixing plate 217 is fixed along a perpendicular direction and is preferably of a plate-shaped configuration, for example. In addition, it is preferable that there is only one fixing plate 217 overall. However, the scope of the present disclosure is not limited thereto.

The cover part 220 is configured to be raised and lowered by being coupled with the coupling part 210. Thereby, the cover part 220 has a configuration in which the cover part 220 seals or opens the internal space 110a of the vessel 110. This cover part 220 may include, for example, an upper part 220a inserted into the insertion part 110b and a lower part 220b inserted into the opening part 111a of the internal space 110a. The upper part 220a has a shape corresponding to the insertion part 110b, and the lower part 220b has a shape corresponding to the opening part 111a or the internal space 110a. Accordingly, the upper part 220a may have a larger diameter or left and right width than the lower part 220b. The upper part 220a and the lower part 220b may have a cylindrical structure, for example, but the scope of the present disclosure is not limited thereto.

Additionally, one side of the cover part 220, preferably the bottom of the lower part 220b, may be configured to secure and couple the cassette 3. For example, the cassette 3 may be configured to be slidably coupled to one side of the cover part 220. Accordingly, the cassette 3 is loaded into the internal space 110a of the vessel 110 by lowering the cover part 220. After the high-temperature pressurizing process is completed, the cassette 3 may be transferred to the standby part 50 by raising and horizontally moving the cover part 220. Fixing/coupling of the cover part 220 and the cassette 3 may be performed by any known structure other than sliding coupling. However, in some cases, the cover part 220 may simply perform the function of covering the pressurizing part 10.

This cover part 220 may include a second contact part 221.

Referring to FIGs. 2 and 4, the second contact part 221 is formed on one side of the cover part 220, preferably on the top of the cover part 220, thereby the second contact part 221 is in contact with each of the first contact parts 213 constituting a pair. As a result, a configuration is provided that the cover part 220 is fixed to the coupling part 210. For this, the second contact part 221 may include a head part 2211 extending in the horizontal direction; and a body part 2213 extending from the bottom of the head part 2211 to the top of the cover part 220. At this time, it is preferable that the head part 2211 has a larger left and right width size than the body part 2213. Therefore, when each of the first contact parts 213 constituting a pair moves forward and comes into close contact with the second contact part 221, the cover part 220 may be coupled and fixed to the coupling part 210. However, it should be noted that fixing the coupling part 210 and the cover part 220 is not necessarily achieved only by the structure of the first contact parts 213 constituting a pair and the second contact part 221, and the fixing may be performed by a known separate structure. Additionally, differently from what is shown in FIG. 2, the second contact part 211 may be formed in a square plate shape rather than an overall cylindrical shape, and in this case, the first contact parts 213 constituting a pair may also be formed in a corresponding shape.

In this way, the second contact part 221 is formed on one side of the individual cover part 220. A plurality of the first contact parts 213 constituting a pair are formed on the single coupling plate 211. Therefore, in a still yet further embodiment of the present disclosure, not only may the high-temperature pressurizing processes be performed by the plurality of pressurizing parts 210 substantially simultaneously, but the high-temperature pressurizing processes may be performed so that the process start/end times by the individual pressurizing parts 210 are different. That is, the cassette 3 fixed to the individual cover part 220 may be independently inserted into the corresponding pressurizing part 10. Alternatively, the individual cassette 3 that has completely gotten through the process may be discharged from the corresponding pressurizing part 10.

Referring to FIG. 3, the discharge hole 230 has a flow path configuration that allows air in the internal space 110a to be discharged to the outside when the fluid is supplied to the internal space 110a for a high-temperature pressurizing process. It is preferable that this discharge hole 230 is formed to penetrate through the cover part 220. To describe the air discharge through the discharge hole 230 in detail, air is discharged to the outside through the discharge hole 230 during the process of supplying the fluid to the internal space 110a of the vessel 110. Then, the valve (not shown) is closed or blocked at the point when the fluid is discharged through the discharge hole 230.

Referring to FIG. 2, the second insertion hole 240 is formed to penetrate through the cover part 220 at a predetermined height to allow the locking part 40 to be inserted. The second insertion hole 240 is preferably formed in a structure where the second insertion hole 240 penetrates the upper part 220a of the cover part 220. Detailed information about this will be replaced with the description of the first insertion hole 150.

Referring to FIG. 1, the door transfer part 30 is connected to one side of the door part 20 and allows the door part 20 to reciprocate between the pressurizing part 10 and the standby part 50. This door transfer part 30 may be connected to the fixing plate 217 or to any position of the door part 20, but the former is preferable. Additionally, the door transfer part 30 may include any known configuration such as a hydraulic cylinder, pneumatic cylinder, or drive motor to transport the door part 20, but the present disclosure is not limited to specific examples. The door part 20 may reciprocate in a horizontal direction by the door transfer part 30.

Referring to FIGs. 1 to 4, the locking part 40 moves forward and/or backward and is inserted into one side of the pressurizing part 10 and the door part 20, thereby the locking part 40 provides a configuration where the door part 20 is allowed to be coupled and fixed to the pressurizing part 10 in a state where the door part 20 covers the pressurizing part 10. The number of locking parts 40 may correspond to the number of individual pressurizing parts 10.

For this, the locking part 40 may include a fixing pin 410.

The fixing pin 410 is a pin type that extends in the horizontal direction. The fixing pin 410 is inserted or de-inserted into the first insertion hole 150 and the second insertion hole 240 by moving forward and backward. The fixing pin 410 may have a cylindrical shape corresponding to the first insertion hole 150 and the second insertion hole 240, but there is no separate limitation on the shape. Additionally, the fixing pin 410 may be connected to any known driving means, such as a hydraulic cylinder, pneumatic cylinder, or drive motor, and may be configured to move forward and/or backward. By using this fixing pin 410, it is possible to control the internal pressure generated upward by the fluid supplied to the internal space 110a.

However, in a still yet further embodiment of the present disclosure, covering the top and, if necessary, the bottom of the pressurizing part 10 is not limited by the configuration of the locking part 40. As another example, it should be noted that the top and, if necessary, the bottom of the pressurizing part 10 may be sealed by a yoke frame. As a further example, the top of the pressurizing part 10 may be sealed using any of the known or to be known configurations, such as a C-clamp type or a Threaded Closing type. It should be noted that the scope of the present disclosure is not limited to specific examples.

Referring to FIG. 1, the standby part 50 is spaced a predetermined distance away from the pressurizing part 10 and provides a configuration where the cassette 3 accommodating the secondary battery, for which the pressurizing process has been completed in the pressurizing part 10, is seated. This standby part 50 may correspond to the side where the cassette 3 is loaded for the pressurizing process. That is, in some cases, the standby part 50 may perform the functions of the input part and the discharge part together.

The storage tank 60 stores the fluid, which is a pressure transmission medium, and supplies the fluid to the pressurizing part 10. This storage tank 60 may communicate with the input hole 130 of the individual pressurizing part 10 through the piping part 70. At this time, a heating block 610 may be formed on one side of the storage tank 60 to supply high-temperature fluid. Generally, in an all-solid-state secondary battery, a solid electrolyte allows ions to move between the solid lattices. Therefore, the contact interface between the active material and the electrolyte is required to be maximized while the interfacial resistance is required to be minimized. Accordingly, a high temperature/high pressure pressurizing process is required to be performed. For this, the storage tank 60 is preferably provided with a heating block 610 to ensure that fluid is supplied to the pressurizing part 10 at a high temperature. In addition, there may be one storage tank 60 or a plurality of storage tanks 60, and there is no separate limitation on the number.

The piping part 70 has one end connected to the pressurizing part 10 and the other end connected to the storage tank 60 to provide a flow path configuration to supply the fluid to the pressurizing part 10. Additionally, the valve 710 may be formed on one side of the pipe 70. The valve 710 may be configured as a check valve, for example, and may determine fluid supply to the pressurizing part 10 through an open or closed operation. The pipe 70 may easily supply the fluid to the pressurizing part 10 by operating a pump (not shown).

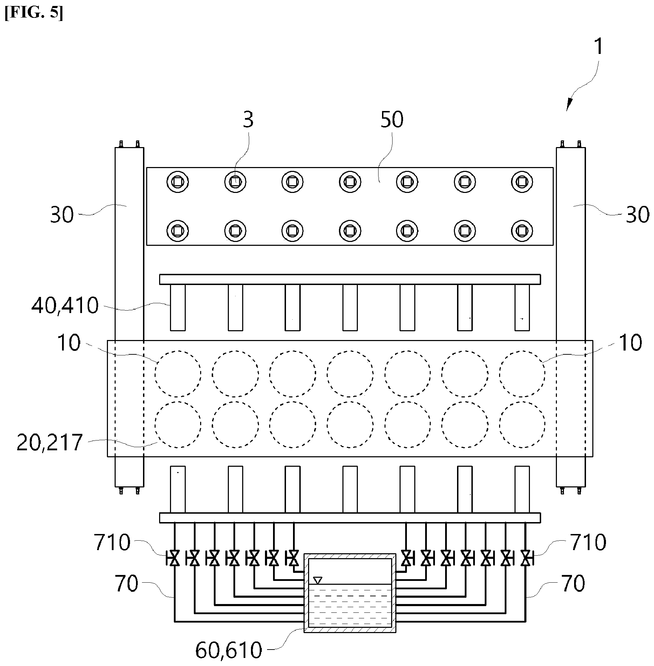

FIGs. 5 to 8 show reference diagrams for explaining a high-temperature pressurizing method for an all-solid-state secondary battery according to a still yet further embodiment of the present disclosure.

Hereinafter, a high-temperature pressurizing method for an all-solid-state secondary battery according to a still yet further embodiment of the present disclosure will be described in detail with reference to the attached drawings. Since the high-temperature pressurizing method for an all-solid-state secondary battery described below may be performed by the above-described high-temperature pressurizing system 1, detailed description of overlapping content will be omitted. In addition, the drawing shows that the pressurizing processes by multiple pressurizing parts are performed simultaneously. However, it should be noted that this is only for convenience of explanation and that the pressurizing processes by at least some of the pressurizing parts may not be performed simultaneously.

First, referring to FIG. 5, the cassette 3 accommodating the secondary battery or the airtight part placed inside is located on the standby part 50. At this time, a single cassette 3 or a plurality of cassettes 3 may be located on the standby part 50.

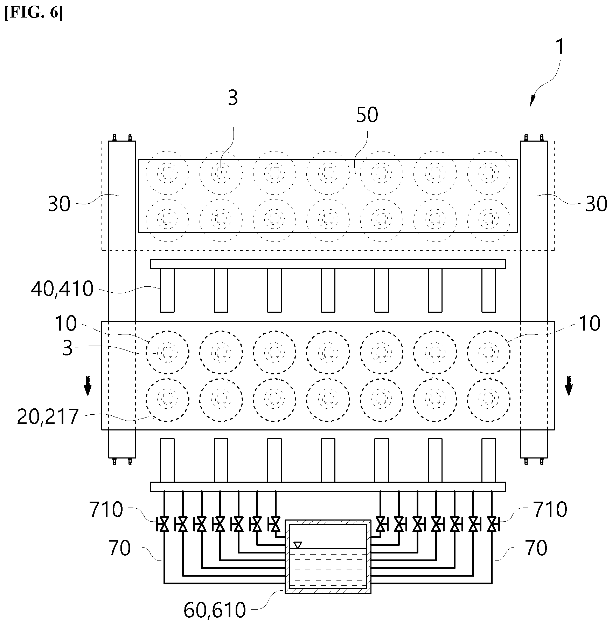

Then, referring to FIG. 6, the door part 20 may be lowered, one side of the door part 20 may be coupled to the cassette 3, and then the door part 20 may be raised. Thereafter, the door part 20 may move toward the pressurizing part 10. At this time, the coupling of the door part 20 and the cassette 3 may be performed by an operator or a separate automatic device such as a robot arm, and there is no separate limitation on the coupling method. Describing this step in detail, the coupling plate 211 and the cover part 220 coupled to the coupling plate 211 are lowered together by the driving means. At this time, each of the first contact parts 213 constituting a pair is in close contact with the second contact part 221. After the cassette 3 is coupled to the cover part 220, the coupling plate 211 and the cover part 220 are raised and lowered together by the driving means. Afterward, the door part 20 may be moved to the upper side of the pressurizing part 10 by the door transfer part 30. As described above, it should be noted that, in the present disclosure, the door part 20 does not necessarily have to be coupled to the cassette 3, and the door part 20 allows the secondary battery to be directly loaded into the pressurizing part 10.

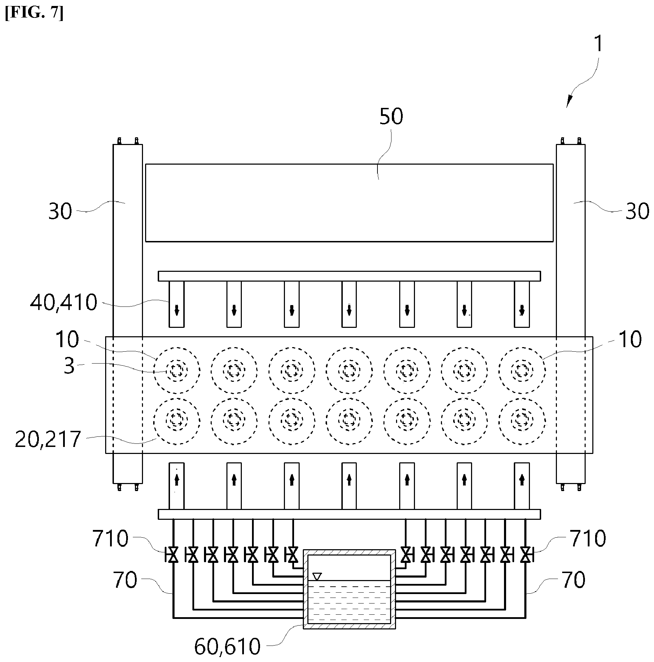

Thereafter, referring to FIG. 7, by lowering the door part 20, it is possible that the cassette 3 is loaded into the internal space 110a of the vessel 110, and the cover part 220 is inserted into the opening part 111a of the internal space 110a and the insertion part 110b. At this time, the door part 20 may be lowered by lowering the coupling plate 211 and the cover part 220 by driving the driving means. As a result, the internal space 110a of the vessel 110 may be completely sealed (see FIG. 4). At this time, the fixing pin 410 may move forward and be inserted into the first insertion hole 150 and the second insertion hole 240. As a result, the vessel 110 and the door part 20 may be coupled with each other. When the door pin 410 is inserted, each of the first contact parts 213 constituting a pair may move backwards and end their close contact with the second contact part 221.

Afterward, the valve 710 is opened to supply the high-temperature fluid from the storage tank 60 through the piping part 70 to the internal space 110a of the vessel 110. Afterward, the high-temperature pressurization process for the all-solid-state secondary battery may be performed for a predetermined period of time.

As mentioned above, in a still yet further embodiment of the present disclosure, the pressurizing processes for the secondary batteries in the cassette 3 corresponding to the individual pressurizing parts 10 may be performed substantially simultaneously. Alternatively, only the pressurizing processes for the secondary batteries in the cassette 3 corresponding to some pressurizing parts 10 may be performed substantially simultaneously. Alternatively, the pressurizing processes for the secondary batteries in the cassette 3 corresponding to the individual pressurizing parts 10 may be performed independently in time. Alternatively, the pressurizing processes that progress through at least some of the pressurizing parts 10 may be performed so that the pressurizing processes overlap in time. There is no separate limitation on the pressurizing process method.

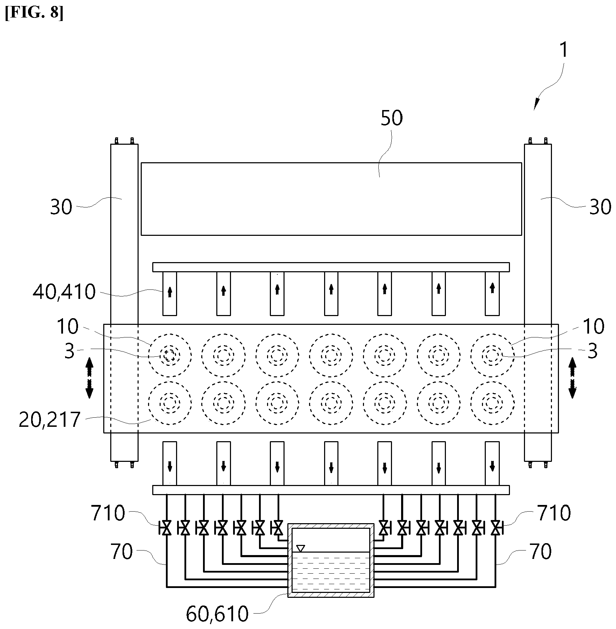

Referring to FIG. 8, when there is the pressurizing part 10 where the high-temperature pressurizing process has been completed, the fixing pin 410 corresponding to the pressurizing part 10 moves backward and is released from the first insertion hole 150 and the second insertion hole 240. At this time, each of the first contact parts 213 constituting a pair may be in close contact with the second contact part 221 corresponding to the pressurizing part 10. Afterward, the cassette 3 accommodating the secondary battery, for which the process has been completed by raising and lowering the door part 20, may be taken out from the internal space 110a of the vessel 110. Alternatively, after the door part 20 is raised and lowered, the secondary battery may be taken out from the pressurizing part 10 through a separate operation.

Then, by operating the door transfer part 30, the door part 20 coupled with the cassette 3 accommodating the secondary battery, for which the process has been completed, may be moved toward the standby part 50.

The above-detailed description is illustrative of the present disclosure. In addition, the foregoing content illustrates and describes preferred embodiments of the present disclosure, and the present disclosure can be used in various other combinations, modifications, and environments. That is, changes or modifications are possible within the scope of the inventive concept disclosed in this specification, the scope equivalent to the written disclosure, and/or the skill or knowledge in the art. The above-described embodiments illustrate the best state for implementing the technical idea of the present disclosure. Various modifications required for specific fields of application and use of the present disclosure are also possible. Accordingly, the detailed description of the invention above is not intended to limit the present disclosure to the disclosed embodiments.

## Claims

1. A high-temperature pressurizing system for an all-solid-state secondary battery, the system comprising:
a pressurizing part configured along a perpendicular direction so that an all-solid-state secondary battery is loaded from the bottom upward, and pressurizing the secondary battery by a supplied fluid;
a door part configured to cause one side of the door part to be raised and lowered, thereby covering an open side of the pressurizing part;
a storage tank for storing the fluid; and
a piping part communicating with the pressurizing part and the storage tank, thereby supplying the fluid from the storage tank to the pressurizing part.

2. The system of Claim 1, wherein the pressurizing part comprises a plurality of pressurizing parts that is arranged and spaced apart from each other in a pressurizing space.

3. The system of Claim 2, wherein pressurizing processes overlap each other in time by using the plurality of pressurizing parts.

4. The system of Claim 1, further comprising:
a door transfer part connected to the door part and configured to move the door part back and forth between the pressurizing part and a standby part; and
the standby part in which the secondary battery which has completely gotten through the pressurizing process is discharged from the pressurizing part.

5. The system of Claim 2, wherein an individual pressurizing part of the plurality of pressurizing parts comprises:
a vessel comprising an internal space extending in a perpendicular direction to bring the secondary battery to be inserted; and
an input hole which allows the fluid from the storage tank to be supplied to the internal space of the vessel.

6. The system of Claim 5, wherein the individual input hole is formed on the bottom of the corresponding vessel.

7. The system of Claim 5, wherein the individual pressurizing part further comprises a spacer formed on the inner surface of the internal space to control a volume of the individual internal space.

8. The system of Claim 5, wherein the door part comprises a plurality of door parts, wherein an individual door part comprises:
a coupling plate, one side of which is coupled with a driving means, thereby being raised or lowered; and
a cover part which is releasably coupled to the coupling plate, thereby sealing or opening the internal space of the vessel.

9. The system of Claim 8, wherein the individual door part further comprises a coupling guide part which is coupled with its corresponding coupling plate and controls the corresponding coupling plate to remain level with the ground.

10. The system of Claim 8, wherein the individual door part further comprises first contact parts which are coupled to a corresponding coupling plate and exist as a pair, each moving forward and backward toward each other, and
the individual cover part comprises a second contact part which is formed on the top of the corresponding cover part and is in close contact with each of the first contact parts constituting a pair as each of the first contact parts constituting a pair moves forward.

11. The system of Claim 8, wherein the individual door part further comprises a discharge hole through which air in the internal space of the vessel is discharged when the fluid is introduced into the internal space of the vessel.

12. The system of Claim 8, wherein the individual pressurizing part further comprises a first insertion hole configured to penetrate through the vessel at a predetermined height,
the individual door part further comprises:
a second insertion hole configured to penetrate through the cover part at a predetermined height; and
a plurality of fixing pins which moves forward and is inserted into the corresponding first and second insertion holes.

13. A high-temperature pressurizing system for an all-solid-state secondary battery, the system comprising:
a plurality of pressurizing parts configured along a perpendicular direction so that an all-solid-state secondary battery is loaded from the bottom upward, and high-temperature pressurizing the secondary battery by a supplied fluid;
a plurality of door parts which is lowered to cause one side thereof to cover an open side of the corresponding pressurizing parts;
a storage tank for storing the fluid; and
a piping part communicating with the corresponding pressurizing parts and the storage tank, thereby supplying the fluid from the storage tank to the corresponding pressurizing parts.
